# EUROPEAN PATENT SPECIFICATION

(11) **EP 0 891 896 B1**
(45) Date of publication and mention of the grant of the patent: **05.06.2002**
(21) Application number: 98112814.3
(22) Date of filing: 10.07.1998
(51) Int. Cl.: B60R 16/02

(54) **A system for indicating the lubricating oil level in an internal combustion engine of a motor vehicle**
System zum Anzeigen des Schmierölzustandes in einem Kraftfahrzeugverbrennungsmotor
Système pour indiquer le niveau d'huile de lubrification dans un moteur à combustion interne d'un véhicule à moteur

(30) Priority: 14.07.1997 IT TO970634
(43) Date of publication of application: 20.01.1999
(73) Proprietor: FIAT AUTO S.p.A., 10135 Torino (IT)
(72) Inventor: Petronio, Mario, 10028 Trofarello (Torino) (IT)
(74) Representative: Quinterno, Giuseppe

(56) References cited:
- DE-A- 3 126 962
- DE-A- 4 011 112
- US-A- 4 503 419
- US-A- 4 684 917

## Description

The present invention relates to a system for indicating the lubricating oil level in an internal combustion engine of a motor vehicle.

More specifically, the subject of the invention is an indicator system comprising:
a level sensor operable to provide a signal when the lubricating oil level in the oil sump of the engine is less than a predetermined level;
an indicator device, and
control circuit means connected to the level sensor and operable to activate the indicator device when the level sensor provides the said signal.

In indicator systems of this type produced up to now the lubricating oil level sensor is of the on/off type and when the instrumentation on the motor vehicle instrument panel is switched on, a control circuit detects the state of the output of this level sensor and activates an optical indicator when the lubricating oil level is less than the predetermined value.

The level sensor in such systems is typically carried by a plug introduced into the engine in such a way that the sensor is positioned at the desired level.

Another indication system of this type is also known from the document DE-3 126 962-A1.

Such systems have the disadvantage that, when the motor vehicle is stationary on inclined ground, for example parked on a slope, the lubricant oil assumes an anomalous level so that in such situations an indication of insufficient oil level can be wrongly generated.

The indicator system according to the prior art is therefore of low reliability.

The object of the present invention is to provide an indicator system which allows this disadvantage to be overcome.

This and other objects are achieved according to the invention by an indicator system the main characteristics of which are defined in the attached Claim 1.

The invention is based on a consideration of the fact that the indication of an insufficient lubricating oil level can be made particularly suitably when the motor vehicle is refuelling at a filling station. An indication provided in such a situation allows the motor vehicle user immediately to act to reinstate a suitable lubricating oil level. An indication activated during the course of refuelling is moreover particularly reliable in that in the very great majority of cases refuelling takes place with the motor vehicle on a level surface.

According to the invention the activation of the device for indicating an insufficient lubricating oil level is therefore enabled when suitable sensor means indicate that the internal combustion engine is switched off and suitable detector means indicate that the fuel level in the motor vehicle tank has a rapid increase of predetermined magnitude. These indications are sufficient reliably to identify the fact that refuelling is in progress.

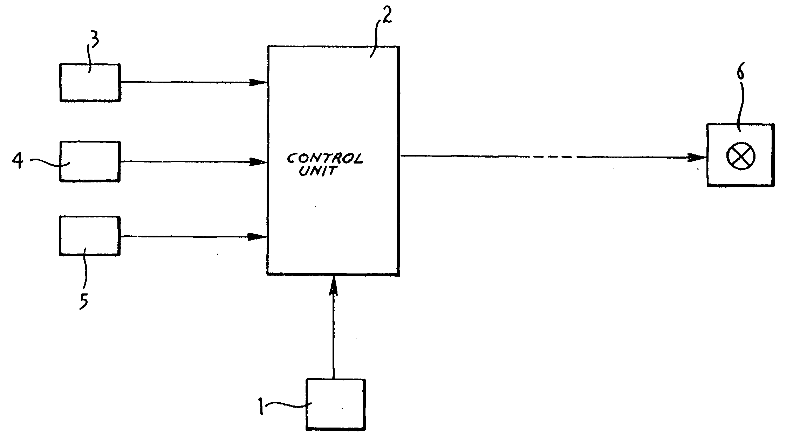

Further characteristics and advantages of the invention will become apparent from the following detailed description given purely by way of non-limitative example with reference to the attached drawing which is a block diagram of an indicator system according to the invention.

In this drawing the reference numeral 1 indicates a level sensor of type known per se intended to be positioned at a predetermined level in the lubricating oil sump of the engine, to provide an electronic control unit 2 with a signal when the lubricating oil level detected is less than the predetermined level.

The control unit 2 is moreover connected to a sensor 3 operable to provide electrical signals indicative of the activated and disactivated condition of the motor vehicle's internal combustion engine. The sensor 3 can for example be a sensor detecting the speed of rotation of the crankshaft.

The unit 2 is likewise connected to a detector device 4 also of type known per se, operable to provide electrical signals indicative of the level of fuel in the motor vehicle's tank.

Finally, the control unit 2 can be conveniently connected to a further sensor 5 operable to provide electrical signals indicative of the engine temperature.

The reference numeral 6 in the drawing generally indicates an indicator device which can be of acoustic or optical type, intended to be activated by the control unit 2 to indicate an insufficient level of lubricating oil in the engine.

The control unit 2 is arranged to acquire signals provided by the sensors 1 and 3 to 5, and to activate the indicator device 6 only when the sensor 1 indicates that the level of lubricating oil is less than the predetermined reference level whilst the signals provided by the sensor 3 and the detector 4 are indicative of the fact that the engine is disactivated and the fuel level in the tank has risen quickly by a predetermined amount.

Conveniently the signal provided by the temperature sensor 5 can be utilised by the control unit 2 in order to allow activation of the indication device 6 only when the temperature of the engine is greater than a predetermined value.

## Claims

1. A system for indicating the lubricating oil level in an internal combustion engine of a motor vehicle, comprising
a level sensor (1) operable to provide a signal when the lubricating oil level in the oil sump of the engine is less than a predetermined level;
an indicator device (6), and
control circuit means (2) connected to the level sensor (1) and operable to activate the indicator device (6) when the level sensor (1) provides the said signal; and sensor means (3) operable to provide electrical signals indicative of the state of disactivation of the engine;
the system being **characterised by** the fact that it further comprises
detector means (4) operable to provide electrical signals indicative of the fuel level in the motor vehicle's fuel tank;
the said control circuit means (2) being further connected to the said sensor means (3) and the detector means (4), and being provided to allow activation of the indicator device (6) when the lubricating oil level sensor (1) provides the said signal whilst the signals provided by the sensor means (3) and by the detector means (4) indicate that the engine is stationary and that the fuel level in the fuel tank has increased quickly by a predetermined amount.

2. A system according to Claim 1, **characterised in that** it further includes a temperature sensor (5) operable to provide signals indicative of the engine temperature, and **in that** the said control circuit means (2) are predisposed to allow activation of the indicator device (6) only when the engine temperature is greater than a predetermined value.

## Patentansprüche

1. System zum Anzeigen des Schmierölstands in einem Kraftfahrzeugverbrennungsmotor, umfassend:
einen Füllstandsfühler (1), der betriebsfähig ist, ein Signal abzugeben, wenn der Schmierölstand in der Ölwanne des Motors unter einem vorbestimmten Stand liegt;
eine Anzeigevorrichtung (6), und
eine Regelkreiseinrichtung (2), die mit dem Füllstandsfühler (1) gekoppelt ist und zur Aktivierung der Anzeigevorrichtung (6) betriebsfähig ist, wenn der Füllstandsfühler (1) das Signal abgibt; und
eine Messfühlereinrichtung (3), die zur Abgabe von den Zustand der Deaktivierung des Motors anzeigenden elektrischen Signalen betriebsfähig ist;
wobei das System dadurch charakterisiert ist, dass es weiters
eine Detektoreinrichtung (4) umfasst, die zur Abgabe von den Treibstoffstand im Kraftfahrzeugtreibstofftank anzeigenden elektrischen Signalen betriebsfähig ist;
wobei die Regelkreiseinrichtung (2) weiters mit der Messfühlereinrichtung (3) und der Detektoreinrichtung (4) verbunden ist und dazu vorgesehen ist, eine Aktivierung der Anzeigevorrichtung (6) zu ermöglichen, wenn der Schmierölstandsfühler (1) das Signal abgibt, während die von der Messfühlereinrichtung (3) und der Detektoreinrichtung (4) abgegebenen Signale darauf hinweisen, dass der Motor abgestellt ist und der Treibstoffstand im Treibstofftank rasch um eine vorbestimmte Menge angestiegen ist.

2. System nach Anspruch 1, **dadurch gekennzeichnet, dass** es weiters einen Temperaturfühler (5) einschließt, der zur Abgabe von die Motortemperatur anzeigenden Signalen betriebsfähig ist, und dass die Regelkreiseinrichtung (2) dazu eingerichtet ist, eine Aktivierung der Anzeigevorrichtung (6) nur dann zu ermöglichen, wenn die Motortemperatur über einem vorbestimmten Wert liegt.

## Revendications

1. Système d'indication du niveau d'huile lubrifiante dans un moteur à combustion interne d'un véhicule à moteur, comprenant
un capteur (1) de niveau destiné à donner un signal lorsque le niveau de l'huile lubrifiante dans le carter d'huile du moteur est au-dessous d'un niveau prédéterminé,
un dispositif indicateur (6), et
un circuit de commande (2) raccordé au capteur de niveau (1) et destiné à activer le dispositif indicateur (6) lorsque le capteur de niveau (1) donne ledit signal, et le dispositif capteur (3) étant destiné à transmettre des signaux électriques représentatifs de l'état de désactivation du moteur,
le système étant **caractérisé par le fait qu'**il comporte en outre :
un dispositif détecteur (4) destiné à transmettre des signaux électriques représentatifs du niveau de carburant dans le réservoir de carburant du véhicule à moteur,
le circuit de commande (2) étant en outre connecté au dispositif capteur (3) et au dispositif détecteur (4) et étant destiné à permettre l'activation du dispositif indicateur (6) lorsque le capteur (1) de niveau d'huile lubrifiante donne ledit signal alors que les signaux donnés par le dispositif capteur (3) et par le dispositif détecteur (4) indiquent que le moteur est à l'arrêt et que le niveau de carburant dans le réservoir de carburant a rapidement augmenté d'une quantité prédéterminée.

2. Système selon la revendication 1, **caractérisé en ce qu'**il comprend en outre un capteur de température (5) destiné à transmettre des signaux représentatifs de la température du moteur, et **en ce que** le circuit de commande (2) est réalisé afin qu'il permette l'activation du dispositif indicateur (6) uniquement lorsque la température du moteur dépasse une valeur prédéterminée.
